# EUROPÄISCHE PATENTANMELDUNG

(11) **EP 1 964 631 A2**
(43) Veröffentlichungstag der Anmeldung: **03.09.2008**
(21) Anmeldenummer: 08102011.7
(22) Anmeldetag: 26.02.2008
(51) Int. Cl.: B23B 27/16

(54) **Schneidplatte für Radsatzbearbeitungswerkzeuge**

(30) Priorität: 27.02.2007 AT 3042007
(71) Anmelder: Boehlerit GmbH & Co.KG., 8605 Kapfenberg (AT)
(72) Erfinder: Pachteu, Roland, 8605 Kapfenberg (AT); Bärnthaler, Walter, 8641 St. Marein im Mürztal (AT)
(74) Vertreter: Wirnsberger, Gernot

(57) **Zusammenfassung**

Die Erfindung betrifft eine Schneidplatte (1) zum spanenden Bearbeiten von insbesondere gewalzten Rädern wie Eisenbahnrädern, aufweisend eine Deckfläche, eine Grundfläche sowie einen Deckfläche und Grundfläche verbindenden Freiflächenbereich, wobei die Schneidplatte (1) in Draufsicht mit einer kreisrunden, umfangsbestimmenden und durch die Deckfläche sowie eine angrenzende Freifläche definierten Schneidkante (5) ausgebildet ist und zwischen der Schneidkante (5) und einem Plattenzentrum (6) einen abfallenden Bereich (7) und einen aufsteigenden Bereich (8) aufweist. Um eine Vermeidung von Endlosspänen bzw. eine günstige Spanbruchbildung zu erreichen, ist erfindungsgemäß vorgesehen, dass im abfallenden Bereich (7) Einbuchtungen (71) vorgesehen sind und im aufsteigenden Bereich (8) Abschnitte (81) mit jeweils etwa in Richtung von der Schneidkante (5) zum Plattenzentrum (6) hin verlaufenden Rippen (82) vorliegen.

## Beschreibung

Die Erfindung betrifft eine Schneidplatte zum spanenden Bearbeiten von insbesondere gewalzten Rädern wie Eisenbahnrädern, aufweisend eine Deckfläche, eine Grundfläche sowie einen Deckfläche und Grundfläche verbindenden Freiflächenbereich, wobei die Schneidplatte in Draufsicht mit einer kreisrunden, umfangsbestimmenden und durch die Deckfläche sowie eine angrenzende Freifläche definierten Schneidkante ausgebildet ist und zwischen der Schneidkante und einem Plattenzentrum einen abfallenden Bereich und einen aufsteigenden Bereich aufweist.

Räder für Schienenfahrzeuge wie Eisenbahnräder bestehen meist aus einem Stahl, der zumindest außen gehärtet ist, um hoch verschleißfest zu sein. Beim Erstellen dieser Räder werden üblicherweise Walz- oder Schmiedeprozesse angewendet, wobei die Räder in eine endabmessungsnahe Form gebracht werden. Eine gewünschte Endkontur eines Rades mit Toleranzen von wenigen zehntel Millimetern (mm) wird in einem anschließenden Verfahrensschritt durch Drehen erstellt.

Eine drehende Bearbeitung von Eisenbahnrädern, die beachtliche Dimensionen von beispielsweise bis zu 1200 mm haben können, erfolgt in eigens hierfür vorgesehenen Maschinenräumen. Bei der drehenden Bearbeitung wird das Rad aufgespannt und gedreht und an das sich drehende Rad ein spanabhebend wirksames Werkzeug bzw. eine Schneidplatte angestellt. Das mit der Schneidplatte bestückte Werkzeug wird dabei entlang der herauszuarbeitenden Flächen des Rades, z. B. einer Lauffläche, vorwärts bewegt.

Bei der drehenden Bearbeitung von Rädern für Schienenfahrzeuge kommt es zur Bildung von Endlosspänen, die ein erhebliches Problem darstellen. Endlosspäne, welche auf eine ungenügende Spanbruchbildung zurückzuführen sind, können eine Länge von mehreren Metern annehmen. Diese Späne werden um die rotierende Achse der Aufnahme für das Rad aufgewickelt, drehen sich ohne zu brechen mit dem bearbeiteten Rad mit und stellen für das Bedienungspersonal ein großes Sicherheitsrisiko dar. Überdies können diese Endlosspäne zu einem Werkzeugausfall und Maschinenstehzeiten führen.

Eine Begründung für die Bildung von Endlosspänen liegt möglicherweise in den Schneidbedingungen. So kann zwar lokal mit relativ großen Vorschüben von 1,5 mm/U (Millimeter pro Umdrehung) gearbeitet werden, allerdings kann ein durch ein Walzen bedingtes Aufmaß beispielsweise zwischen 2 mm und 7 mm betragen. Es sind somit Späne großer Dicke abzunehmen, was einem günstigen Spanbruch entgegenwirkt. Andererseits ist konturabhängig überdies mit geringeren Vorschüben zu arbeiten, was ebenfalls die Ausbildung eines Endlosspanes begünstigt.

Nicht nur, aber auch auf Grund der vorstehend geschilderten Problematik ist eine Bildung von Endlos- bzw. Fließspänen bei der drehenden Bearbeitung von Rädern für Schienenfahrzeuge unerwünscht. Man hat bereits versucht, dieses Problem durch Abwandeln von Schneidplatten der eingangs genannten Art zu lösen. Allerdings konnte bislang keine befriedigende Lösung erreicht werden. Im Ergebnis ist bei allen Schneidplatten gemäß dem Stand der Technik ein unerwünscht langer Span bzw. Endlosspan gegeben.

Hier knüpft die Erfindung an und setzt sich das Ziel, eine Schneidplatte der eingangs genannten Art anzugeben, mit der bei einer drehenden Bearbeitung von insbesondere gewalzten Rädern wie Eisenbahnrädern ein günstiger Spanbruch erreicht wird.

Dieses Ziel wird durch eine Schneidplatte der eingangs genannten Art erreicht, wenn im abfallenden Bereich Einbuchtungen vorgesehen sind und im aufsteigenden Bereich Abschnitte mit jeweils etwa in Richtung von der Schneidkante zum Plattenzentrum hin verlaufenden Rippen vorliegen. Vorteilhafte Varianten einer erfindungsgemäßen Schneidplatte sind Gegenstand der Ansprüche 2 bis 10.

Bei einer erfindungsgemäßen Schneidplatte ist von Vorteil, dass bei einer Bearbeitung von Rädern, insbesondere Eisenbahnrädern, unabhängig vom Vorschub des Werkzeuges bzw. der Schneidplatte und unabhängig von einer Dicke der abzuspanenden Späne stets ein günstiger Spanbruch mit kürzeren Spänen als bisher erreicht wird. Auf Grund dieser günstigen Spanbildung ist die Gefahr eines Aufwickelns von Spänen um die sich drehende Radaufnahme zumindest weitestgehend vermieden.

Eine umfassende Theorie für den Mechanismus des begünstigten Spanbruches bei einer erfindungsgemäßen Schneidplatte steht noch nicht fest. In praktischen Erprobungen hat sich allerdings gezeigt, dass für die gewünschte, kontrollierte Spanbruchbildung sowohl die Einbuchtungen im abfallenden Bereich als auch die mit Rippen ausgestatteten Abschnitte im aufsteigenden Bereich erforderlich sind. Schneidplatten mit Einbuchtungen im abfallenden Bereich alleine bringen ebenso wenig die gewünschten Ergebnisse hinsichtlich des Spanbruches wie Schneidplatten, die nur mit Rippen aufweisenden Abschnitten im aufsteigenden Bereich ausgebildet sind. Erst eine Kombination von Einbuchtungen im abfallenden Bereich mit Rippen aufweisenden Abschnitten im aufsteigenden Bereich zwingt im Schneideinsatz einen abfließenden Span seine Richtung zu ändern, so dass der Span in der Folge noch im heißen Zustand auf die Schneidplatte selbst rückgeführt wird oder auf die Schneidplattenhalterung trifft und dadurch bricht. Vermutet wird, dass es durch die vorgesehenen geometrischen Formen der Schneidplatte im abfallenden und im aufsteigenden Bereich insgesamt zu einem mehrfachen Umlenken des abgenommenen Spanes kommt, wodurch der sich gleichzeitig einringelnde Span belastet wird und spätestens bei Aufprall auf ein Hindernis an seiner schwächsten Stelle bricht.

Wenngleich für eine hervorragende Schnittwirkung die Einbuchtungen im abfallenden Bereich bis an die Schneidkante gesetzt sein können, so dass im Extremfall eine in seitlicher Ansicht gewellte Schneidkante gegeben ist, so hat es sich doch bewährt, wenn die Einbuchtungen von der Schneidkante beabstandet sind. Die Schneidkante ist dann weniger anfällig in Bezug auf Brüchigkeit, ohne dass eine Schneidleistung wesentlich beeinträchtigt wäre. Bevorzugt ist es, dass die Einbuchtungen zur Schneidkante einen Abstand von weniger als 0,7 mm aufweisen, weil dann sowohl ein guter Spanbruch erreicht wird, als auch eine gute Schneidleistung bei geringer Vibrationsneigung der Schneidplatte gegeben ist.

Da je nach zu bearbeitendem Abschnitt des Rades die konturbestimmenden bzw. schneidaktiven Bereiche der Schneidkante variieren können, ist es bevorzugt, dass die Einbuchtungen in einem konzentrisch zur Schneidkante verlaufenden Kreis angeordnet sind, damit der gewünscht gute Spanbruch in allen potenziell schneidaktiven Bereichen erreicht wird. Aus den gleichen Gründen ist es bevorzugt, dass im aufsteigenden Bereich die Abschnitte in einem konzentrisch zur Schneidkante verlaufenden Kreis angeordnet sind oder einen solchen Kreis bilden.

Die Rippen aufweisenden Abschnitte sind weiter bevorzugt konkav ausgebildet. Durch die konkave Ausbildung bzw. Wölbung sowohl in Richtung von der Schneidkante zum Schneidplattenzentrum hin als auch im Wesentlichen senkrecht dazu, werden den abgleitenden Spänen bei konstanter Rillenhöhe jeweils unterschiedliche Bedingungen geboten, was sich auf ein mehrfaches Umlenken der Späne und damit einen Spanbruch äußerst günstig auswirkt.

In einer Variante einer erfindungsgemäßen Schneidplatte kann vorgesehen sein, dass an den aufsteigenden Bereich zum Plattenzentrum hin ein waagerechter Bereich anschließt und sich die Abschnitte mit den Rippen vom abfallenden Bereich bis in den waagerechten Bereich erstrecken. Durch diese weitgehende Einformung der Abschnitte mit den Rippen können die Spanbruch bestimmenden Elemente der Schneidplatte maximiert werden.

Günstig kann es weiter sein, um einem Span möglichst viele Richtungsänderungen beim Gleiten an der Schneidplatte aufzuzwingen, dass eine Breite einer Einbuchtung größer als ein Abstand zwischen benachbarten Rippen ist.

Die Einbuchtungen können getrennt von den Abschnitten mit den Rippen vorliegen. Ebenso ist es aber möglich, und bevorzugt, dass die Einbuchtungen zumindest teilweise direkt in die Abschnitte mit den Rippen übergehen.

In den einzelnen Abschnitten verlaufen die Rippen bevorzugt jeweils parallel. Zwar kann vorgesehen sein, die Rippen über den gesamten Umfang der Schneidplatte exakt zum Schneidplattenzentrum hin auszurichten, jedoch führt dies dazu, dass die Rippen zueinander zulaufen und so verjüngende Bereiche, die an sich einer günstigen Spanbruchbildung abträglich sind, ausbilden. Eine parallele Anordnung, jeweils in einzelnen Abschnitten, ist daher bevorzugt.

Weitere Merkmale, Wirkungen und Vorteile einer erfindungsgemäßen Schneidplatte ergeben sich aus dem Zusammenhang der Beschreibung und den nachfolgenden Ausführungsbeispielen, anhand derer die Erfindung noch weitergehend erläutert ist.

Es zeigen
Fig. 1 einen Teil eines Eisenbahnrades;
Fig. 2 eine erfindungsgemäße Schneidplatte in Draufsicht;
Fig. 3 die erfindungsgemäße Schneidplatte gemäß Fig. 2 in einer Seitenansicht (teilweise querschnittliche Darstellung);
Fig. 4 die erfindungsgemäße Schneidplatte gemäß Fig. 2 in einer perspektivischen Ansicht;
Fig. 5 eine Variante einer erfindungsgemäßen Schneidplatte in Draufsicht.

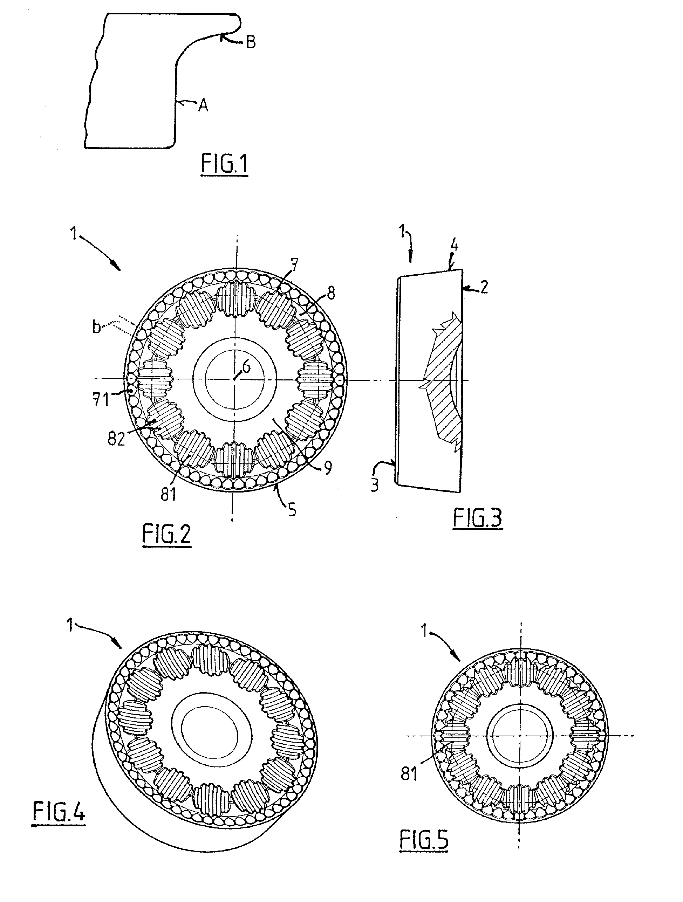

In Fig. 1 ist ein Teil eines Eisenbahnrades dargestellt, dessen Kontur, die mit geforderten Toleranzen von wenigen zehntel Millimetern zu fertigen ist, durch Einsatz eines erfindungsgemäßen Werkzeuges erzeugt werden kann. Dazu wird der beispielsweise gewalzte Radrohling aufgespannt und um seine Drehachse in Drehbewegung versetzt, wobei gleichzeitig ein eine Schneidplatte tragendes Werkzeug angestellt und derart eine gewünschte Kontur des Rades durch Drehen erzeugt wird. Dabei wird beispielsweise im Bereich A, der gerade ausgebildet ist und im Einsatz des Rades einer Lauffläche entspricht, mit einem Vorschub von 1,5 mm/U und im Bereich B mit einem Vorschub von 0,5 bis 1,5 mm/U gearbeitet.

Eine erfindungsgemäße Schneidplatte 1, mit welcher bei einer derartigen Bearbeitung ein günstiger Spanbruch und eine Vermeidung von Endlos- bzw. Fließspänen erreicht werden kann, ist in Fig. 2 bis Fig. 4 näher dargestellt. Wie anhand der Fig. 2 und Fig. 3 ersichtlich, weist eine erfindungsgemäße Schneidplatte 1 eine Deckfläche 2 und eine parallele, gegenüberliegende Grundfläche 3 auf. Die Deckfläche 2 und die Grundfläche 3 sind durch eine einzige Freifläche 4, welche vollumfänglich verläuft, miteinander verbunden. Dabei ist die Freifläche 4 gegenüber der Deckfläche 2 und der Grundfläche 3 geneigt, um einen geeigneten Freiwinkel einzustellen. Gegebenenfalls kann ein Freiflächenbereich auch in mehrere Abschnitte unterteilt sein, die eine unterschiedliche Neigung gegenüber der Grundfläche 3 bzw. der Deckfläche 2 aufweisen.

In Draufsicht ist ein äußerer Umfang der kreisrunden Schneidplatte 1 durch eine Schneidkante 5 bestimmt. Ausgehend von der Schneidkante 5 und zum Plattenzentrum 6 hin gesehen, schließt an die Schneidkante 5 ein eben oder abfallend geneigt ausgebildeter Bereich von ca. 0,4 mm Breite an, dem ein abfallender Bereich 7 und unmittelbar an diesen Bereich 7 anschließend ein aufsteigender Bereich 8 folgt, ehe der aufsteigende Bereich 8 in einen parallel zur Grundfläche 3 ausgebildeten Bereich 9 übergeht. Dabei sind im abfallenden Bereich 7 eine Vielzahl von Einbuchtungen 71 bzw. Vertiefungen vorgesehen, die in Bezug auf die Schneidkante 5 0,2 mm bis 0,5 mm rückversetzt sind. Die einzelnen Einbuchtungen 71 sind aneinander anliegend angeordnet und bilden insgesamt eine kreisförmige, konzentrisch zur Schneidkante 5 verlaufende Reihe von Erhöhungen und Vertiefungen. Dabei sind die einzelnen Einbuchtungen 71 jeweils so geformt, dass diese in ihrer Breite b zum Plattenzentrum hin verjüngt ausgebildet sind. Eine Länge der Einbuchtungen entspricht im Wesentlichen jener des abfallenden Bereiches 7.

Im aufsteigenden Bereich 8 sind gewölbte Abschnitte 81 vorgesehen, die voneinander getrennt sind. Die Wölbungen sind dabei so geformt, dass sowohl in Richtung von der Schneidkante 5 zum Plattenzentrum 6 hin als auch in Richtung des durch die Abschnitte 81 gebildeten Kreises eine Krümmung der Abschnitte 81 gegeben ist. Jeder der Abschnitte 81, die voneinander räumlich getrennt sind, weist mehrere parallel verlaufende, zum Plattenzentrum hin gerichtete Rippen 82 bzw., anders ausgedrückt, Erhöhungen und Vertiefungen auf. Diese Erhöhungen und Vertiefungen bewirken im Zusammenspiel mit den Einbuchtungen 71, dass ein Span bei einem Schneideinsatz eine mehrfache Richtungsänderung erfährt, was zu einem gewünschten Ausbilden von kurzen Spänen führt. Um diese gewünschten Wirkungen beim Abspanen bestmöglich zu erreichen, sind die Einbuchtungen 71 in ihrer Breite b größer gestaltet, als sein Abstand zwischen einzelnen Rippen 82. Die Rippen 82 bzw. Abschnitte 81 wiederum erstrecken sich nicht nur über den aufsteigenden Bereich 8, sondern ragen bis in den Bereich 9 hinein, um den abgleitenden Spänen eine möglichst große Fläche für erzwungene Richtungsänderungen anzubieten und damit einen kontrollierten Spanbruch zu erzielen.

Wie in Fig. 5 dargestellt, kann eine erfindungsgemäße Schneidplatte 1, die beispielsweise aus einem laserbearbeiteten Hartmetallrohling hergestellt sein kann, auch so ausgebildet sein, dass die individuellen Abschnitte 81 ineinander übergehend ausgebildet sind. Des Weiteren kann vorgesehen sein, wie ebenfalls aus Fig. 5 ersichtlich, dass die mit Rippen 82 ausgebildeten Abschnitte 81 teilweise integral mit den Einbuchtungen 71 ausgebildet sind und bereits vom abfallenden Bereich 7 weg und bis in den ebenen Bereich 9 hinein verlaufen.

## Patentansprüche

1. Schneidplatte (1) zum spanenden Bearbeiten von insbesondere gewalzten Rädern wie Eisenbahnrädern, aufweisend eine Deckfläche (2), eine Grundfläche (3) sowie einen Deckfläche (2) und Grundfläche (3) verbindenden Freiflächenbereich, wobei die Schneidplatte (1) in Draufsicht mit einer kreisrunden, umfangsbestimmenden und durch die Deckfläche (2) sowie eine angrenzende Freifläche (4) definierten Schneidkante (5) ausgebildet ist und zwischen der Schneidkante (5) und einem Plattenzentrum (6) einen abfallenden Bereich (7) und einen aufsteigenden Bereich (8) aufweist, **dadurch gekennzeichnet, dass** im abfallenden Bereich (7) Einbuchtungen (71) vorgesehen sind und im aufsteigenden Bereich (8) Abschnitte (81) mit jeweils etwa in Richtung von der Schneidkante (5) zum Plattenzentrum (6) hin verlaufenden Rippen (82) vorliegen.

2. Schneidplatte (1) nach Anspruch 1, **dadurch gekennzeichnet, dass** die Einbuchtungen (71) von der Schneidkante (5) beabstandet sind.

3. Schneidplatte (1) nach Anspruch 2, **dadurch gekennzeichnet, dass** die Einbuchtungen (71) zur Schneidkante (5) einen Abstand von weniger als 0,7 mm aufweisen.

4. Schneidplatte (1) nach einem der Ansprüche 1 bis 3, **dadurch gekennzeichnet, dass** die Einbuchtungen (71) in einem konzentrisch zur Schneidkante (5) verlaufenden Kreis angeordnet sind.

5. Schneidplatte (1) nach Anspruch 4, **dadurch gekennzeichnet, dass** im aufsteigenden Bereich (8) die Abschnitte (81) in einem konzentrisch zur Schneidkante (5) verlaufenden Kreis angeordnet sind oder einen solchen Kreis bilden.

6. Schneidplatte (1) nach einem der Ansprüche 1 bis 5, **dadurch gekennzeichnet, dass** die Abschnitte (81) konkav ausgebildet sind.

7. Schneidplatte (1) nach einem der Ansprüche 1 bis 6, **dadurch gekennzeichnet, dass** an den aufsteigenden Bereich (8) zum Plattenzentrum (6) hin ein waagrechter Bereich (9) anschließt und sich die Abschnitte (81) mit den Rippen (82) vom abfallenden Bereich (7) bis in den waagrechten Bereich (9) erstrecken.

8. Schneidplatte (1) nach einem der Ansprüche 1 bis 7, **dadurch gekennzeichnet, dass** eine Breite (b) einer Einbuchtung (71) größer als ein Abstand zwischen benachbarten Rippen (82) ist.

9. Schneidplatte (1) nach einem der Ansprüche 1 bis 8, **dadurch gekennzeichnet, dass** die Einbuchtungen (71) zumindest teilweise direkt in die Abschnitte (81) mit den Rippen (82) übergehen.

10. Schneidplatte (1) nach einem der Ansprüche 1 bis 9, **dadurch gekennzeichnet, dass** die Rippen (82) in den einzelnen Abschnitten (81) jeweils parallel verlaufen.
